# EUROPEAN PATENT APPLICATION

(11) **EP 2 453 685 A1**
(43) Date of publication of application: **16.05.2012**
(21) Application number: 10797085.7
(22) Date of filing: 02.07.2010
(51) Int. Cl.: H04W 12/04, H04W 16/26

(54) **MOBILE COMMUNICATION METHOD AND MOBILE COMMUNICATION SYSTEM**

(30) Priority: 04.07.2009 JP 2009159375
(71) Applicant: NTT DOCOMO, INC., Chiyoda-ku Tokyo 100-6150 (JP)
(72) Inventor: HAPSARI, Wuri Andarmawanti, Tokyo 100-6150 (JP); TAKAHASHI, Hideaki, Tokyo 100-6150 (JP); IWAMURA, Mikio, Tokyo 100-6150 (JP); ISHII, Minami, Tokyo 100-6150 (JP); ZUGENMAIER, Alf, Tokyo 100-6150 (JP)
(74) Representative: HOFFMANN EITLE
(86) International application number: PCT/JP2010/061346
(87) International publication number: WO 2011/004774

(57) **Abstract**

A mobile communication method according to the present invention comprising a step in which the mobile switching center MME transmits Attach Accept including the KeNB to the relay node RN in response to the received Attach Request, a step in which the radio base station DeNB generates the K_RRCint, the K_RRCenc, and the K_UPenc based on the received KeNB, and notifies the relay node RN of only the K_RRCint and the K_RRCenc, and a step in which the relay node RN saves the notified K_RRCint and K_RRCenc.

## Description

### TECHNICAL FIELD

The present invention relates to a mobile communication method and a mobile communication system.

### BACKGROUND ART

In a mobile communication system employing an LTE (Long Term Evolution)-Advanced scheme which is the next version of an LTE scheme, a "relay node RN" having the same function as that of a radio base station DeNB (Donor eNB) may be connected between a mobile station UE and the radio base station DeNB.

Such an LTE-Advanced mobile communication system is so configured such that E-RAB (E-UTRAN Radio Access Bearer) is set between the mobile station UE and a mobile switching center MME (Mobility Management Entity), a Uu radio bearer is set between the mobile station UE and the relay node RN, a Un radio bearer is set between the relay node RN and the radio base station DeNB, and an S1 bearer is set between the radio base station DeNB and the mobile switching center MME.

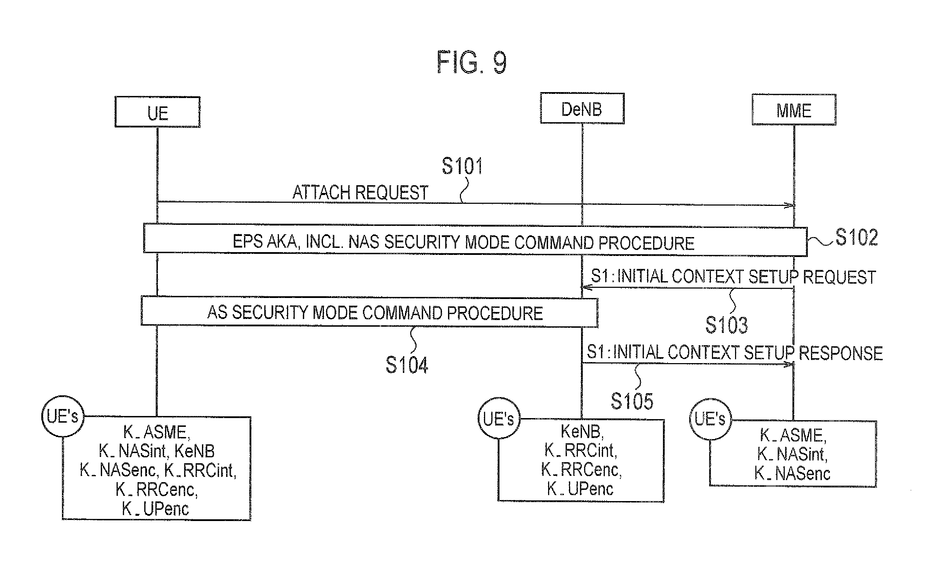

Hereinafter, an operation in which the mobile station UE performs an attach process in the mobile communication system will be described with reference to Fig. 9.

As illustrated in Fig. 9, in step S101, the mobile station UE transmits an "Attach Request" to the mobile switching center MME.

In step S102, between the mobile station UE and the mobile switching center MME, an authentication and encryption process, specifically, an "EPS (Evolved Packet System)-AKA (Authentication and Key Agreement) procedure" including a "NAS (Non-Access Stratum) Security Mode Command procedure" is performed.

In step S103, the mobile switching center MME transmits an "S1: Initial Context Setup Request" including KeNB to the radio base station DeNB. Here, it is assumed that the mobile switching center MME generates the KeNB using K_ASME.

In step S104, between the mobile station UE and the radio base station DeNB, an "AS (Access Stratum) Security Mode Command procedure" is performed.

In step S105, the radio base station DeNB generates K_RRCint, K_RRCenc, and K_UPenc using the KeNB, and transmits an "S1: Initial Context Setup Response" to the mobile switching center MME.

As a consequence, when the attach process of the mobile station UE has been completed, the mobile station UE holds K_ASME, K_NASint, the KeNB, a K_NASenc, the K_RRCint, the K_RRCenc, and the K_UPenc, the radio base station DeNB holds the KeNB, the K_RRCint, the K_RRCenc, and the K_UPenc, and the mobile switching center MME holds the K_ASME, the K_NASint, and the K_NASenc.

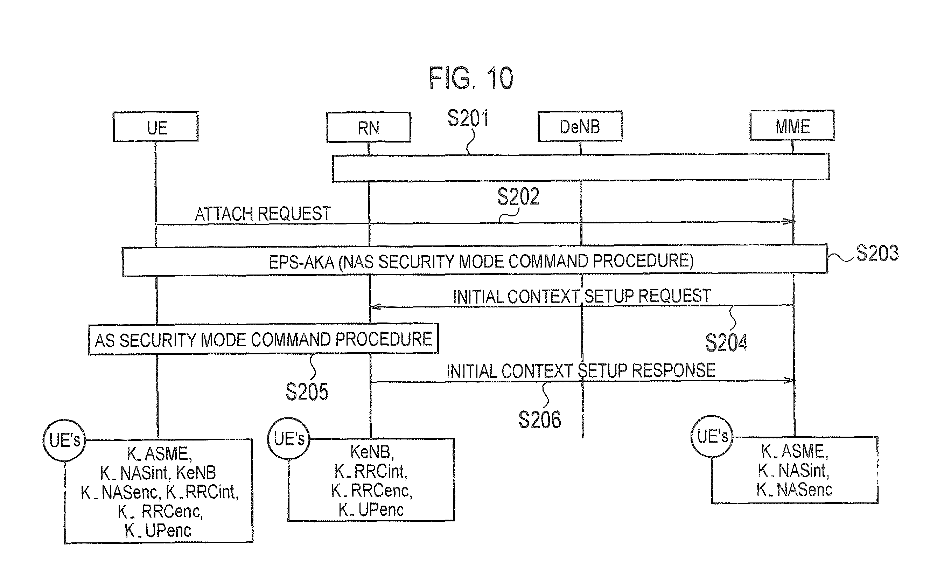

Here, it is assumed that the operation in which the mobile station UE performs the attach process under the control of the relay node RN in the mobile communication system as illustrated in Fig. 10 is the same as that illustrated in Fig. 9.

As a consequence, when the attach process of the mobile station UE has been completed, the relay node RN holds the KeNB, the K_RRCint, the K_RRCenc, and the K_UPenc.

### SUMMARY OF THE INVENTION

### PROBLEMS TO BE SOLVED BY THE INVENTION

However, unlike the radio base station DeNB, the relay node RN is not a secure node, that is, unlike an installation place (a local station and the like of a telecommunication provider) of the radio base station DeNB, an installation place of the relay node RN may include various places (on a telephone pole, an outer wall of a house, and the like) according to a scenario of its use.

Therefore, it is not preferable that the KeNB, which is a key related to the security of the mobile station UE, is held by the relay node RN.

In addition, in order that the KeNB is held by the relay node RN, it is necessary to construct a secure environment in the relay node RN by using hardware and software, resulting in an increase in an apparatus cost.

Therefore, the present invention has been achieved in view of the above-described problems, and an object thereof is to provide a mobile communication method and a mobile communication system, by which it is possible to perform communication using a relay node RN without allowing the relay node RN to hold KeNB.

### MEANS FOR SOLVING THE PROBLEM

A gist of a first characteristic of the present invention is a mobile communication method, comprising, a step in which a mobile station transmits an attach request signal to a relay node, a step in which the relay node transmits the attach request signal to a mobile switching center, a step in which the mobile switching center transmits an attach accept signal including a master key to the relay node in response to the received attach request signal, a step in which the relay node notifies the radio base station of the master key without saving the master key, a step in which the radio base station generates a key for integrity check of a control signal, a key for encryption of a control signal, and a key for encryption of a data signal based on the notified master key, and notifies the relay node of only the key for integrity check of a control signal and the key for encryption of a control signal, and a step in which the relay node saves the notified key for integrity check of a control signal and the key for encryption of a control signal.

A gist of a second characteristic of the present invention is a mobile communication method, comprising, a step in which the mobile station transmits an attach request signal to a relay node, a step in which the relay node transmits the attach request signal to a radio base station, a step in which the radio base station transmits the attach request signal to a mobile switching center, a step in which the mobile switching center transmits an attach accept signal including a master key to the radio base station in response to the received attach request signal, a step in which the radio base station generates a key for integrity check of a control signal, a key for encryption of a control signal, and a key for encryption of a data signal based on the master key, and notifies the relay node of only the key for integrity check of a control signal and the key for encryption of a control signal by the attach accept signal, and a step in which the relay node saves the notified key for integrity check of a control signal and the key for encryption of a control signal.

A gist of a third characteristic of the present invention is a mobile communication system, comprising, a relay node; a radio base station; and a mobile switching center, in which a first protocol is configured to be terminated between the relay node and the mobile switching center, a second protocol is configured to be terminated between the relay node and the radio base station, the relay node comprises, a function configured to transmit an attach request signal, which is received from the mobile station, to the mobile switching center by using the first protocol, a function configured to receive an attach accept signal for the attach request signal from the mobile switching center by using the first protocol, a function configured to transmit a signal including a master key to the radio base station by using the second protocol without saving the master key, the master key being included in the attach accept signal, and a function configured to receive a signal including a key for integrity check of a control signal and a key for encryption of a control signal from the radio base station by using the second protocol, and save the signal, and the radio base station comprises a function configured to generate the key for integrity check of a control signal, the key for encryption of a control signal, and a key for encryption of a data signal based on the master key included in the signal received from the relay node by using the second protocol, and transmit the signal including only the key for integrity check of a control signal and the key for encryption of a control signal to the relay node.

A gist of a forth characteristic of the present invention is A mobile communication system, comprising: a relay node; a radio base station; and a mobile switching center, in which a first protocol is configured to be terminated between the relay node and the radio base station, a second protocol is configured to be terminated between the radio base station and the mobile switching center, the relay node comprises, a function configured to transmit an attach request signal, which is received from the mobile station, to the radio base station by using the first protocol, a function configured to receive an attach accept signal for the attach request signal from the radio base station by using the first protocol, and a function configured to save a key for integrity check of a control signal and a key for encryption of a control signal, which are included in the attach accept signal, and the radio base station comprises, a function configured to receive the attach accept signal from the mobile switching center by using the second protocol, a function configured to generate the key for integrity check of a control signal, the key for encryption of a control signal, and a key for encryption of a data signal based on a master key included in the attach accept signal, and a function configured to transmit the attach accept signal including only the key for integrity check of a control signal and the key for encryption of a control signal to the relay node by using the first protocol.

### EFFECT OF THE INVENTION

As described above, according to the present invention, it is possible to provide a mobile communication method and a mobile communication system, by which it is possible to perform communication using a relay node RN without allowing the relay node RN to hold KeNB.

### BRIEF DESCRIPTION OF THE DRAWINGS

[Fig. 1] Fig. 1 is a diagram illustrating a protocol stack of a mobile communication system according to a first embodiment of the present invention.
[Fig. 2] Fig. 2 is a sequence diagram illustrating an operation of the mobile communication system according to the first embodiment of the present invention.
[Fig. 3] Fig. 3 is a diagram illustrating a protocol stack of a mobile communication system according to a second embodiment of the present invention.
[Fig. 4] Fig. 4 is a sequence diagram illustrating an operation of the mobile communication system according to a second embodiment of the present invention.
[Fig. 5] Fig. 5 is a diagram illustrating a protocol stack of a mobile communication system according to a third embodiment of the present invention.
[Fig. 6] Fig. 6 is a sequence diagram illustrating an operation of the mobile communication system according to the third embodiment of the present invention.
[Fig. 7] Fig. 7 is a diagram illustrating a protocol stack of a mobile communication system according to a fourth embodiment of the present invention.
[Fig. 8] Fig. 8 is a sequence diagram illustrating an operation of the mobile communication system according to the fourth embodiment of the present invention.
[Fig. 9] Fig. 9 is a sequence diagram illustrating an operation of a conventional mobile communication system.
[Fig. 10] Fig. 10 is a sequence diagram illustrating an operation of a conventional mobile communication system.

### BEST MODES FOR CARRYING OUT THE INVENTION

### (Mobile communication system according to first embodiment of present invention)

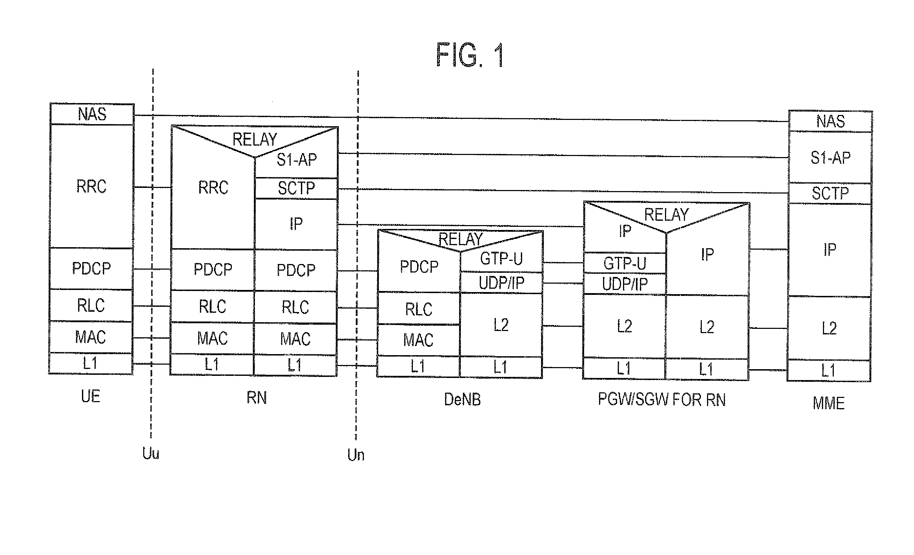

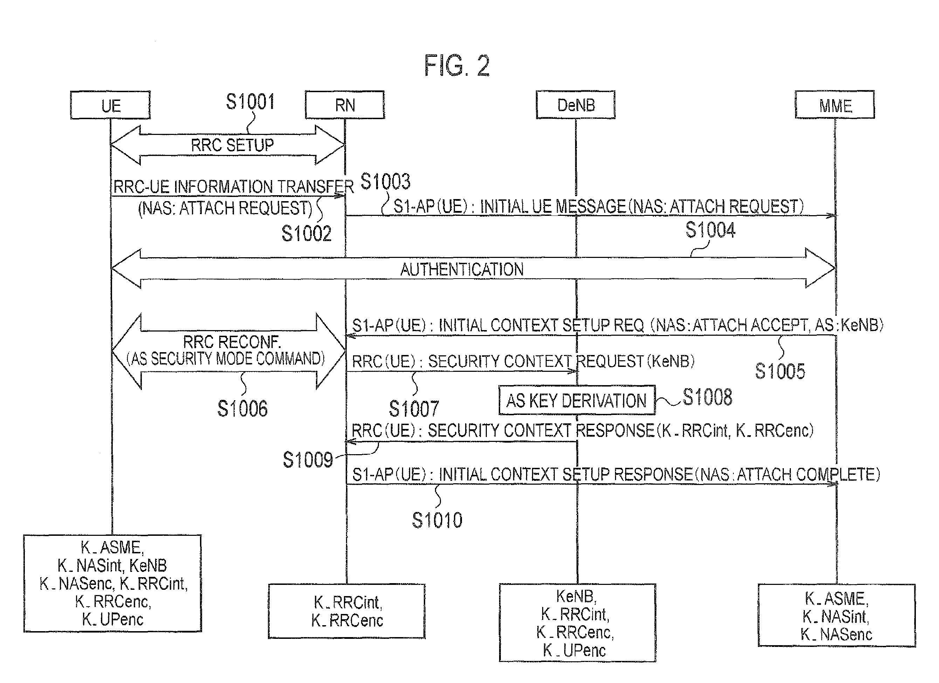

With reference to Fig. 1 and Fig. 2, a mobile communication system according to a first embodiment of the present invention will be described.

As illustrated in Fig. 1, the mobile communication system according to the present embodiment is an LTE-Advanced mobile communication system, and includes a mobile station UE, a relay node RN, a radio base station DeNB, a gateway device PGW (PDN Gateway)/SGW (Serving Gateway) for the relay node RN, a mobile switching center MME, and the like.

The mobile station UE includes a physical layer (L1) function, an MAC (Media Access Control) layer function, an RLC (Radio Link Control) layer function, a PDCP (Packet Data Convergence Protocol) layer function, an RRC (Radio Resource Control) layer function, and a NAS layer function.

The relay node RN, as the function of a Uu interface, includes the physical layer (L1) function, the MAC layer function, the RLC layer function, the PDCP layer function, and the RRC layer function.

Furthermore, the relay node RN, as the function of a Un interface, includes the physical layer (L1) function, the MAC layer function, the RLC layer function, the PDCP layer function, an IP (Internet Protocol) layer function, an SCTP (Stream Control Transmission Protocol) layer function, and an S1-AP layer function.

The radio base station DeNB, as the function of the Un interface, includes the physical layer (L1) function, the MAC layer function, the RLC layer function, and the PDCP layer function.

Furthermore, the radio base station DeNB, as the function of the gateway device PGW/SGW-side for the relay node RN, includes the physical layer (L1) function, an L2 function, a UDP (User Datagram Protocol)/IP layer function, and a GTP-U (GPRS Tunneling Protocol-U plane) layer function.

The gateway device PGW/SGW for the relay node RN, as the function of the radio base station DeNB-side, includes the physical layer (L1) function, the L2 function, the UDP/IP layer function, the GTP-U layer function, and the IP layer function.

Furthermore, the gateway device PGW/SGW for the relay node RN, as the function of the mobile switching center MME-side, includes the physical layer (L1) function, the L2 function, and the IP layer function.

Here, an S1-AP (a first protocol) is configured to be terminated between the S1-AP layer function of the relay node RN and the S1-AP layer function of the mobile switching center MME.

Furthermore, PDCP (RRC) (a second protocol) on the Un interface is configured to be terminated between the PDCP layer function of the relay node RN and the PDCP layer function of the radio base station DeNB.

In addition, in the mobile communication system according to the present embodiment, the radio base station DeNB is configured to perform management with respect to security information (UE AS Security Context) for a U plane (a data signal), and the relay node RN is configured to perform management with respect to security information (UE AS Security Context) for a C plane (a control signal).

Hereinafter, with reference to Fig. 2, an operation in which the mobile station UE performs an attach process under the control of the relay node RN in the mobile communication system according to the present embodiment will be described. In addition, while the present operation is focused, description of the gateway device PGW/SGW for the relay node RN, which is a device that deals with the U plane, is omitted in Fig. 2.

As illustrated in Fig. 2, after an RRC connection is established between the mobile station UE and the relay node RN in step S1001, the RRC layer function of the mobile station UE transmits an "RRC-UE Information Transfer (NAS: Attach Request)" to the RRC layer function of the relay node RN in step S1002.

In step S1003, the S1-AP layer function of the relay node RN transmits an "S1-AP (UE): Initial UE Message (NAS: Attach Request)" to the S1-AP layer function of the mobile switching center MME.

After an authentication and encryption process is performed between the mobile station UE and the mobile switching center MME in step S1004, the S1-AP layer function of the mobile switching center MME transmits an "S1-AP (UE): Initial Context Setup Req/(NAS: Attach Accept)" including the KeNB to the S1-AP layer function of the relay node RN in step S1005.

Here, the KeNB is a master key which is generated using K_ASME and used in order to generate K_RRCint, K_RRCenc, K_UPenc and the like.

The K_RRCint is a key (an AS layer) for integrity check of a C plane (a control signal), the K_RRCenc is a key (an AS layer) for encryption of the C plane (the control signal), and the K_UPenc is a key for encryption of a U plane (a data signal).

An "AS Security Mode Command procedure" is performed between the mobile station UE and the relay node RN in step S1006, and the PDCP layer function of the relay node RN transmits an "RRC (UE): Security Context Request" including the KeNB to the PDCP layer function of the radio base station DeNB in step S1007.

Here, it is assumed that the relay node RN does not save the KeNB.

In step S1008, the radio base station DeNB generates the K_RRCint, the K_RRCenc, the K_UPenc and the like based on the KeNB.

In step S1009, the PDCP layer function of the radio base station DeNB transmits an "RRC (UE): Security Context Response" including the K_RRCint and the K_RRCenc and not including the K_UPenc to the PDCP layer function of the relay node RN.

In step S1010, the relay node RN saves the K_RRCint and the K_RRCenc included in the received "RRC (UE): Security Context Response", and the S1-AP layer function of the relay node RN transmits an "S1-AP (UE): Initial Context Setup Response (NAS: Attach Complete)" to the S1-AP layer function of the mobile switching center MME.

As a consequence, when the attach process of the mobile station UE has been completed, the mobile station UE holds the K_ASME, the K_NASint, the KeNB, the K_NASenc, the K_RRCint, the K_RRCenc, and the K_UPenc, the relay node RN holds the K_RRCint and the K_RRCenc, the radio base station DeNB holds the KeNB, the K_RRCint, the K_RRCenc, and the K_UPenc, and the mobile switching center MME holds the K_ASME, the K_NASint, and the K_NASenc.

Here, the K_NASint is a key (a NAS layer) for integrity check of the C plane (the control signal), and the K_NASenc is a key (a NAS layer) for encryption of the C plane (the control signal).

In accordance with the mobile communication system according to the first embodiment of the present invention, it is possible to achieve communication using the relay node RN without allowing the relay node RN to hold the KeNB.

The characteristics of the present embodiment as described above may be expressed as follows.

A first characteristic of the present embodiment is summarized as a mobile communication method comprising: a step in which the mobile station UE transmits the "RRC-UE Information Transfer (NAS; Attach Request (the attach request signal))" to the relay node RN; a step in which the relay node RN transmits the "S1-AP (UE): Initial UE Message (NAS: Attach Request (the attach request signal))" to the mobile switching center MME; a step in which the mobile switching center MME transmits the "S1-AP (UE): Initial Context Setup Req/(NAS: Attach Accept)(attach accept signal)" including the KeNB (the master key) to the relay node RN in response to the received "S1-AP (UE): Initial UE Message (NAS: Attach Request)"; a step in which the relay node RN notifies the radio base station DeNB of the KeNB without saving the KeNB; a step in which the radio base station DeNB generates the K_RRCint (the key for integrity check of a control signal), the K_RRCenc (the key for encryption of a control signal), and the K_UPenc (the key for encryption of a data signal) based on the notified KeNB, and notifies the relay node RN of only the K_RRCint and the K_RRCenc; and a step in which the relay node RN saves the notified K__RRCint and K_RRCenc.

A second characteristic of the present embodiment is summarized as a mobile communication system provided with a relay node RN, a radio base station DeNB, and a mobile switching center MME, wherein the S1-AP (the first protocol) is configured to be terminated between the relay node RN and the mobile switching center MME, the PDCP (RRC) (the second protocol) on the Un interface is configured to be terminated between the relay node RN and the radio base station DeNB, the relay node RN includes: a function configured to transmit the "Attach Request", which is received from the mobile station UE, to the mobile switching center MME by using the S1-AP; a function configured to receive the "Attach Accept" for the "Attach Request" from the mobile switching center MME; a function configured to transmit the "Security Context Request (the signal)" including the KeNB to the radio base station DeNB by using the PDCP (RRC) without saving the KeNB included in the "Attach Accept"; and a function configured to receive the "Security Context Response (the signal)" including the K_RRCint and the K_RRCenc from the radio base station DeNB and save the "Security Context Response (the signal)", and the radio base station DeNB includes a function configured to generate the K_RRCint, the K_RRCenc, and the K_UPenc based on the KeNB included in the "Security Context Request" received from the relay node RN by using the PDCP (RRC), and transmit the "Security Context Response" including the K_RRCint and the K_RRCenc to the relay node RN.

### (Mobile communication system according to second embodiment of present invention)

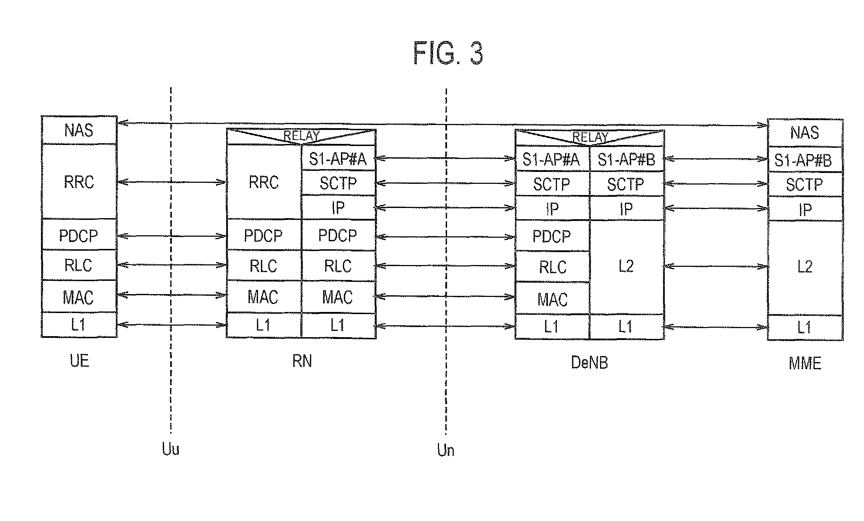

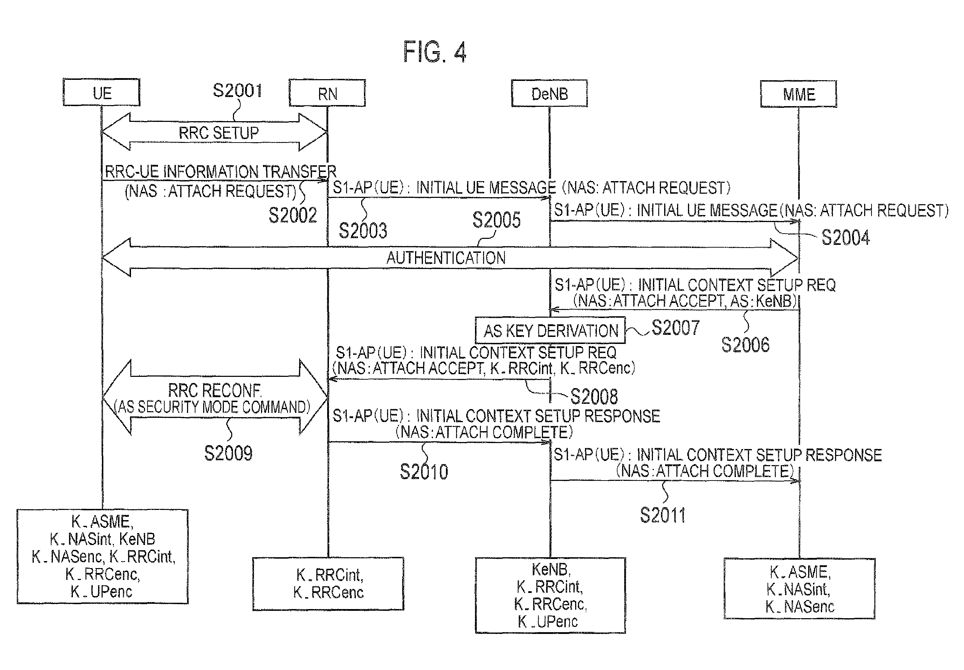

With reference to Fig. 3 and Fig. 4, the mobile communication system according to a second embodiment of the present invention will be described. Hereinafter, the mobile communication system according to the second embodiment of the present invention will be described while focusing on the difference from the mobile communication system according to the above-mentioned first embodiment.

As illustrated in Fig. 3, the radio base station DeNB, as the function of a Un interface, includes the physical layer (L1) function, the MAC layer function, the RLC layer function, the PDCP layer function, the IP layer function, the SCTP layer function, and the S1-AP layer function.

Here, the S1-AP layer function may be an S1-AP layer function obtained by repairing an S1-AP layer function defined in the 3GPP Release.8, and may be a separate S1-AP layer function.

Furthermore, the radio base station DeNB, as the function of the mobile switching center MME-side, includes the physical layer (L1) function, the L2 function, the IP layer function, the SCTP layer function, and the S1-AP layer function.

Here, an S1-AP#A (a first protocol) is configured to be terminated between the S1-AP layer function of the relay node RN and the S1-AP layer function of the radio base station DeNB.

Furthermore, an S1-AP#B (a second protocol) is configured to be terminated between the S1-AP layer function of the radio base station DeNB and the S1-AP layer function of the mobile switching center MME.

Hereinafter, with reference to Fig. 4, an operation in which the mobile station UE performs an attach process under the control of the relay node RN in the mobile communication system according to the present embodiment will be described.

As illustrated in Fig. 4, after an RRC connection is established between the mobile station UE and the relay node RN in step S2001, the RRC layer function of the mobile station UE transmits an "RRC-UE Information Transfer (NAS: Attach Request)" to the RRC layer function of the relay node RN in step S2002.

In step S2003, the S1-AP layer function of the relay node RN transmits an "S1-AP (UE): Initial UE Message (NAS: Attach Request)" to the S1-AP layer function of the radio base station DeNB.

In step S2004, the S1-AP layer function of the radio base station DeNB transmits the "S1-AP (UE): Initial UE Message (NAS: Attach Request)" to the S1-AP layer function of the mobile switching center MME.

After an authentication and encryption process is performed between the mobile station UE and the mobile switching center MME in step S2005, the S1-AP layer function of the mobile switching center MME transmits an "S1-AP (UE): Initial Context Setup Req/(NAS: Attach Accept)" including KeNB to the S1-AP layer function of the radio base station DeNB in step S2006.

In step S2007, the radio base station DeNB generates K_RRCint, K_RRCenc, K_UPenc and the like based on the KeNB included in the received "S1-AP (UE): Initial Context Setup Req/(NAS: Attach Accept)".

In step S2008, the S1-AP layer function of the radio base station DeNB transmits an "S1-AP (UE): Initial Context Setup Request (NAS: Attach Request)" including the K_RRCint and the K_RRCenc and not including the K_UPenc to the S1-AP layer function of the relay node RN.

An "AS Security Mode Command procedure" is performed between the mobile station UE and the relay node RN in step S2009, and the S1-AP layer function of the relay node RN transmits an "S1-AP (UE): Initial Context Setup Response (NAS: Attach Complete)" to the S1-AP layer function of the radio base station DeNB in step S2010.

In step S2011, the S1-AP layer function of the radio base station DeNB transmits the "S1-AP (UE): Initial Context Setup Response (NAS: Attach Complete)" to the S1-AP layer function of the mobile switching center MME.

As a consequence, when the attach process of the mobile station UE has been completed, the mobile station UE holds the K_ASME, the K_NASint, the KeNB, the K_NASenc, the K_RRCint, the K_RRCenc, and the K_UPenc, the relay node RN holds the K_RRCint and the K_RRCenc, the radio base station DeNB holds the KeNB, the K_RRCint, the K_RRCenc, and the K_UPenc, and the mobile switching center MME holds the K_ASME, the K_NASint, and the K_NASenc.

The characteristics of the present embodiment as described above may be expressed as follows.

A first characteristic of the present embodiment is summarized as a mobile communication method comprising: a step in which the mobile station UE transmits the "RRC-UE Information Transfer (NAS: Attach Request (the attach request signal))" to the relay node RN; a step in which the relay node RN transmits the "S1-AP (UE): Initial UE Message (NAS: Attach Request (the attach request signal))" to the radio base station DeNB; a step in which the radio base station DeNB transmits the "S1-AP (UE): Initial UE Message (NAS: Attach Request (the attach request signal))" to the mobile switching center MME; a step in which the mobile switching center MME transmits the "S1-AP (UE): Initial Context Setup Req (NAS: Attach Accept) (the attach accept signal) " including the KeNB to the radio base station DeNB in response to the received "S1-AP (UE): Initial UE Message (NAS: Attach Request (the attach request signal))"; a step in which the radio base station DeNB generates the K_RRCint, the K_RRCenc, and the K_UPenc based on the KeNB, and notifies the relay node RN of only the K_RRCint and the K_RRCenc by the "S1-AP (UE): Initial Context Setup Req/(NAS: Attach Accept (the attach accept signal))"; and a step in which the relay node RN saves the notified K_RRCint and K_RRCenc.

A second characteristic of the present embodiment is summarized as a mobile communication system provided with a relay node RN, a radio base station DeNB, and a mobile switching center MME, wherein the S1-AP (RN-DeNB) (the first protocol) is configured to be terminated between the relay node RN and the radio base station DeNB, the S1-AP (DeNB-MME) (the second protocol) is configured to be terminated between the radio base station DeNB and the mobile switching center MME, the relay node RN having a function configured to transmit the "Attach Request", which is received from the mobile station UE, to the radio base station DeNB by using the S1-AP (RN-DeNB), a function configured to receive the "Attach Accept" for the "Attach Request" from the radio base station DeNB by using the S1-AP (RN-DeNB), and a function configured to save the K_RRCint and the K_RRCenc included in the "Attach Accept"; and the radio base station DeNB having a function configured to receive the "Attach Accept" from the mobile switching center MME by using the S1-AP (DeNB-MME), a function configured to generate the K_RRCint, the K_RRCenc, and the K_UPenc based on the KeNB included in the "Attach Accept", and a function configured to transmit the "Attach Accept" including only the K_RRCint and the K_RRCenc to the relay node RN by using the S1-AP (RN-DeNB).

### (Mobile communication system according to third embodiment of present invention)

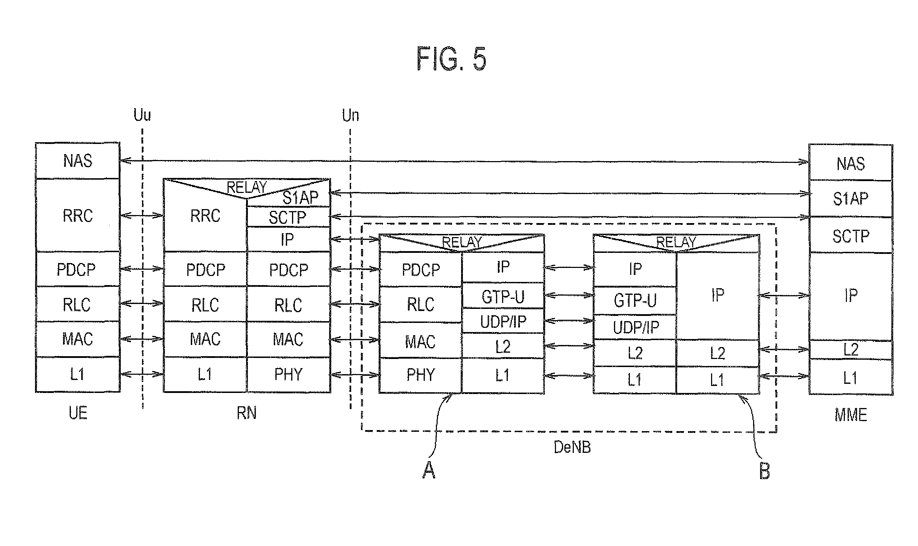

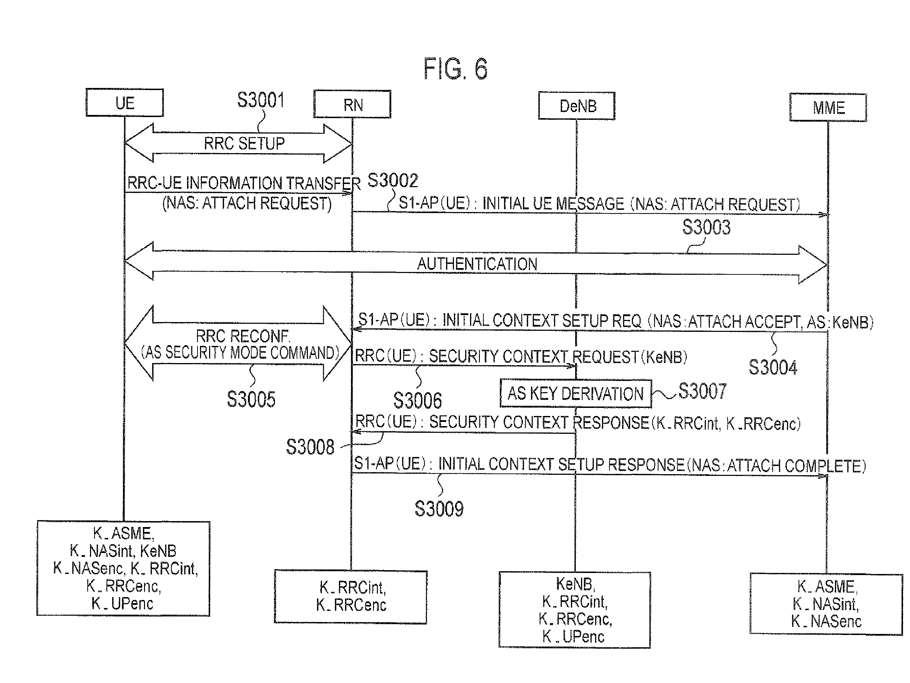

With reference to Fig. 5 and Fig. 6, the mobile communication system according to a third embodiment of the present invention will be described. Hereinafter, the mobile communication system according to the third embodiment of the present invention will be described while focusing on the difference from the mobile communication system according to the above-mentioned first embodiment.

As illustrated in Fig. 5, in the mobile communication system according to the present embodiment, the radio base station DeNB is configured to have the function of the gateway device PGW/SGW for the relay node RN illustrated in Fig. 1.

Other configurations of the mobile communication system according to the third embodiment are the same as the configurations of the mobile communication system according to the above-mentioned first embodiment, and the operation of the mobile communication system according to the present embodiment illustrated in Fig. 6 is the same as the operation of the mobile communication system according to the above-mentioned first embodiment illustrated in Fig. 2.

### (Mobile communication system according to fourth embodiment of present invention)

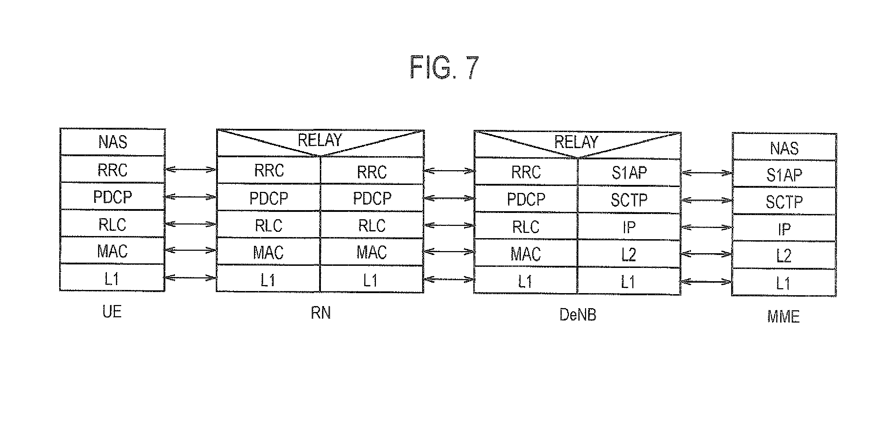

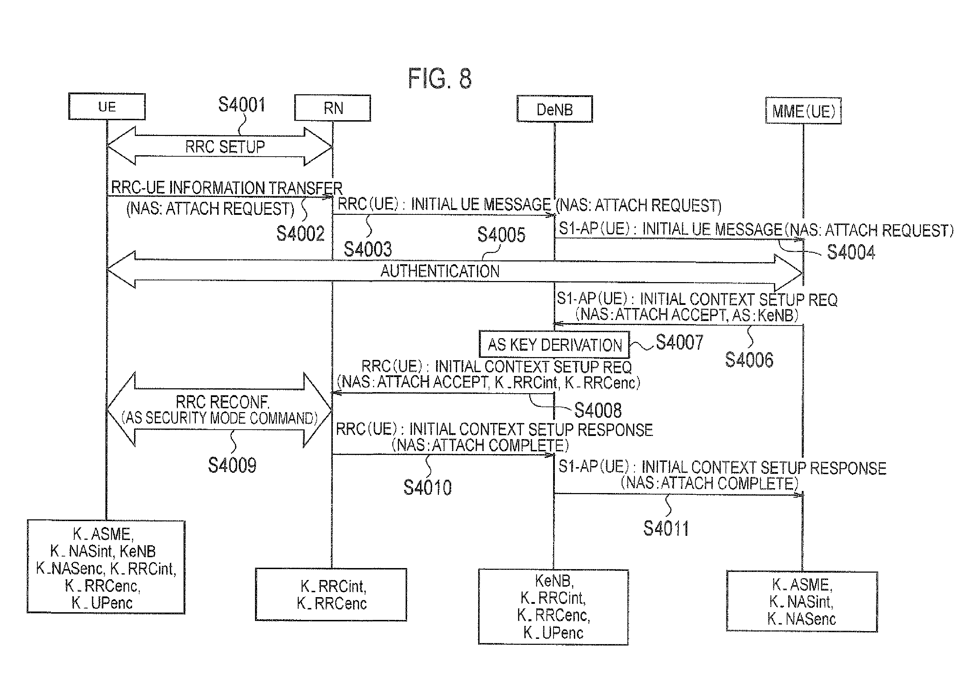

With reference to Fig. 7 and Fig. 8, the mobile communication system according to a fourth embodiment of the present invention will be described. Hereinafter, the mobile communication system according to the fourth embodiment of the present invention will be described while focusing on the difference from the mobile communication system according to the above-mentioned second embodiment.

As illustrated in Fig. 7, the radio base station DeNB, as the function of a Un interface, includes the physical layer (L1) function, the MAC layer function, the RLC layer function, the PDCP layer function, and the RRC layer function.

The relay node RN, as the function of the Un interface, includes the physical layer (L1) function, the MAC layer function, the RLC layer function, the PDCP layer function, and the RRC layer function.

Here, the RRC (the first protocol) is configured to be terminated between the RRC layer function of the relay node RN and the RRC layer function of the radio base station DeNB.

Furthermore, the S1-AP (the second protocol) is configured to be terminated between the S1-AP layer function of the radio base station DeNB and the S1-AP layer function of the mobile switching center MME.

Hereinafter, with reference to Fig. 8, an operation in which the mobile station UE performs an attach process under the control of the relay node RN in the mobile communication system according to the present embodiment will be described.

As illustrated in Fig. 8, after an RRC connection is established between the mobile station UE and the relay node RN in step S4001, the RRC layer function of the mobile station UE transmits an "RRC-UE Information Transfer (NAS: Attach Request)" to the RRC layer function of the relay node RN in step S4002.

In step S4003, the RRC layer function of the relay node RN transmits an "RRC (UE): Initial UE Message (NAS: Attach Request)" to the RRC layer function of the radio base station DeNB.

In step S4004, the S1-AP layer function of the radio base station DeNB transmits an "S1-AP (UE): Initial UE Message (NAS: Attach Request)" to the S1-AP layer function of the mobile switching center MME.

After an authentication and encryption process is performed between the mobile station UE and the mobile switching center MME in step S4005, the S1-AP layer function of the mobile switching center MME transmits an "S1-AP (UE): Initial Context Setup Req/(NAS: Attach Accept)" including KeNB to the S1-AP layer function of the radio base station DeNB in step S4006.

In step S4007, the radio base station DeNB generates K_RRCint, K_RRCenc, K_UPenc and the like based on the KeNB," included in the received "S1-AP (UE): Initial Context Setup Req (NAS: Attach Accept)".

In step S4008, the RRC layer function of the radio base station DeNB transmits an "RRC (UE): Initial Context Setup Request (NAS: Attach Request)" including the K_RRCint and the K_RRCenc and not including the K_UPenc to the RRC layer function of the relay node RN.

An "AS Security Mode Command procedure" is performed between the mobile station UE and the relay node RN in step S4009, and the RRC layer function of the relay node RN transmits an "RRC (UE): Initial Context Setup Response (NAS: Attach Complete)" to the RRC layer function of the radio base station DeNB in step S4010.

In step S4011, the S1-AP layer function of the radio base station DeNB transmits an "S1-AP (UE): Initial Context Setup Response (NAS: Attach Complete)" to the S1-AP layer function of the mobile switching center MME.

As a consequence, when the attach process of the mobile station UE has been completed, the mobile station UE holds the K_ASME, the K_NASint, the KeNB, the K_NASenc, the K_RRCint, the K_RRCenc, and the K_UPenc, the relay node RN holds the K_RRCint and the K_RRCenc, the radio base station DeNB holds the KeNB, the K_RRCint, the K_RRCenc, and the K_UPenc, and the mobile switching center MME holds the K_ASME, the K_NASint, and the K_NASenc.

The characteristics of the present embodiment as described above may be expressed as follows.

A first characteristic of the present embodiment is summarized as a mobile communication method, comprising: a step in which the mobile station UE transmits the "RRC-UE Transfer : (NAS: Attach Request (the attach request signal))" to the relay node RN; a step in which the relay node RN transmits the "RRC (UE): Initial UE Message (NAS: Attach Request (the attach request signal))" to the radio base station DeNB; a step in which the radio base station DeNB transmits the "S1-AP (UE): Initial UE Message (NAS: Attach Request (the attach request signal))" to the mobile switching center MME; a step in which the mobile switching center MME transmits the "S1-AP (UE): Initial Context Setup Req (NAS: Attach Accept) (the attach accept signal) " including the KeNB to the radio base station DeNB in response to the received "S1-AP (UE): Initial UE Message (NAS: Attach Request (the attach request signal))"; a step in which the radio base station DeNB generates the K_RRCint, the K_RRCenc, and the K_UPenc based on the KeNB, and notifies the relay node RN of only the K_RRCint and the K_RRCenc by the "RRC (UE): Initial Context Setup Req (NAS: Attach Accept) (the attach accept signal) "; and a step in which the relay node RN saves the notified K_RRCint and K_RRCenc.

A second characteristic of the present embodiment is summarized as a mobile communication system provided with a relay node RN, a radio base station DeNB, and a mobile switching center MME, wherein the RRC (the first protocol) is configured to be terminated between the relay node RN and the radio base station DeNB, the S1-AP (the second protocol) is configured to be terminated between the radio base station DeNB and the mobile switching center MME, the relay node RN having a function configured to transmit the "Attach Request", which is received from the mobile station UE, to the radio base station DeNB by using the RRC, a function configured to receive the "Attach Accept" for the "Attach Request" from the radio base station DeNB by using the RRC, and a function configured to save the K_RRCint and the K_RRCenc included in the "Attach Accept", and the radio base station DeNB having a function configured to receive the "Attach Accept" from the mobile switching center MME by using the S1-AP, a function configured to generate the K_RRCint, the K_RRCenc, and the K_UPenc based on the KeNB included in the "Attach Accept", and a function configured to transmit the "Attach Accept" including only the K_RRCint and the K_RRCenc to the relay node RN by using the RRC.

It is noted that the operation of the above-described the radio base station DeNB, the relay node RN, the mobile station UE or the mobile switching center MME may be implemented by a hardware, may also be implemented by a software module executed by a processor, and may further be implemented by the combination of the both.

The software module may be arranged in a storage medium of an arbitrary format such as RAM(Random Access Memory), a flash memory, ROM (Read Only Memory), EPROM (Erasable Programmable ROM), EEPROM (Electronically Erasable and Programmable ROM), a register, a hard disk, a removable disk, and CD-ROM.

The storage medium is connected to the processor so that the processor can write and read information into and from the storage medium. Such a storage medium may also be accumulated in the processor. The storage medium and processor may be arranged in ASIC. Such the ASIC may be arranged in the radio base station DeNB, the relay node RN, the mobile station UE or the mobile switching center MME. Further, such a storage medium or a processor may be arranged, as a discrete component, in the radio base station DeNB, the relay node RN, the mobile station UE or the mobile switching center MME.

Thus, the present invention has been explained in detail by using the above-described embodiments; however, it is obvious that for persons skilled in the art, the present invention is not limited to the embodiments explained herein. The present invention can be implemented as a corrected and modified mode without departing from the gist and the scope of the present invention defined by the claims. Therefore, the description of the specification is intended for explaining the example only and does not impose any limited meaning to the present invention.

## Claims

1. A mobile communication method, comprising:
a step in which a mobile station transmits an attach request signal to a relay node;
a step in which the relay node transmits the attach request signal to a mobile switching center;
a step in which the mobile switching center transmits an attach accept signal including a master key to the relay node in response to the received attach request signal;
a step in which the relay node notifies the radio base station of the master key without saving the master key;
a step in which the radio base station generates a key for integrity check of a control signal, a key for encryption of a control signal, and a key for encryption of a data signal based on the notified master key, and notifies the relay node of only the key for integrity check of a control signal and the key for encryption of a control signal; and
a step in which the relay node saves the notified key for integrity check of a control signal and the key for encryption of a control signal.

2. A mobile communication method, comprising:
a step in which the mobile station transmits an attach request signal to a relay node;
a step in which the relay node transmits the attach request signal to a radio base station;
a step in which the radio base station transmits the attach request signal to a mobile switching center;
a step in which the mobile switching center transmits an attach accept signal including a master key to the radio base station in response to the received attach request signal;
a step in which the radio base station generates a key for integrity check of a control signal, a key for encryption of a control signal, and a key for encryption of a data signal based on the master key, and notifies the relay node of only the key for integrity check of a control signal and the key for encryption of a control signal by the attach accept signal; and
a step in which the relay node saves the notified key for integrity check of a control signal and the key for encryption of a control signal.

3. A mobile communication system, comprising: a relay node; a radio base station; and a mobile switching center, wherein
a first protocol is configured to be terminated between the relay node and the mobile switching center,
a second protocol is configured to be terminated between the relay node and the radio base station,
the relay node comprises:
a function configured to transmit an attach request signal, which is received from the mobile station, to the mobile switching center by using the first protocol;
a function configured to receive an attach accept signal for the attach request signal from the mobile switching center by using the first protocol;
a function configured to transmit a signal including a master key to the radio base station by using the second protocol without saving the master key, the master key being included in the attach accept signal; and
a function configured to receive a signal including a key for integrity check of a control signal and a key for encryption of a control signal from the radio base station by using the second protocol, and save the signal, and
the radio base station comprises a function configured to generate the key for integrity check of a control signal, the key for encryption of a control signal, and a key for encryption of a data signal based on the master key included in the signal received from the relay node by using the second protocol, and transmit the signal including only the key for integrity check of a control signal and the key for encryption of a control signal to the relay node.

4. A mobile communication system, comprising: a relay node; a radio base station; and a mobile switching center, wherein
a first protocol is configured to be terminated between the relay node and the radio base station,
a second protocol is configured to be terminated between the radio base station and the mobile switching center,
the relay node comprises:
a function configured to transmit an attach request signal, which is received from the mobile station, to the radio base station by using the first protocol;
a function configured to receive an attach accept signal for the attach request signal from the radio base station by using the first protocol; and
a function configured to save a key for integrity check of a control signal and a key for encryption of a control signal, which are included in the attach accept signal, and
the radio base station comprises:
a function configured to receive the attach accept signal from the mobile switching center by using the second protocol;
a function configured to generate the key for integrity check of a control signal, the key for encryption of a control signal, and a key for encryption of a data signal based on a master key included in the attach accept signal; and
a function configured to transmit the attach accept signal including only the key for integrity check of a control signal and the key for encryption of a control signal to the relay node by using the first protocol.
